# EUROPEAN PATENT SPECIFICATION

(11) **EP 3 032 554 B1**
(45) Date of publication and mention of the grant of the patent: **28.08.2019**
(21) Application number: 15168395.0
(22) Date of filing: 20.05.2015
(51) Int. Cl.: H01F 41/02

(54) **MANUFACTURING METHOD OF SPLIT TYPE NON-MAGNETIZED PERMANENT MAGNETS**
HERSTELLUNGSVERFAHREN FÜR EINEN UNTERTEILTEN NICHTMAGNETISIERTEN DAUERMAGENTEN
PROCÉDÉ DE FABRICATION D'AIMANTS PERMANENTS NON-AIMANTÉS DE TYPE SCINDÉS

(30) Priority: 02.12.2014 KR 20140170783
(43) Date of publication of application: 15.06.2016
(73) Proprietor: Hyundai Motor Company, Seoul 137-938 (KR)
(72) Inventor: Kim, Jung Shik, Seoul 137-772 (KR); Moon, Sang Hoon, Gyeonggi-do 448-140 (KR); Kim, Kyoung Bum, Gyeonggi-do 448-170 (KR); Park, Kun Min, Gyeonggi-do 443-280 (KR); Cho, Hyoung Jun, Seoul 138-751 (KR)
(74) Representative: Isarpatent

(56) References cited:
- EP-A1- 1 746 611
- EP-A1- 2 254 131
- EP-A2- 2 369 719
- DE-A1-102014 004 513
- US-A1- 2014 007 980

## Description

### BACKGROUND

### 1. Technical Field

The present disclosure relates to a manufacturing method of split type and incomplete split type non-magnetized permanent magnets and an incomplete split type non-magnetized permanent magnet, and more particularly, to a manufacturing method of split type and incomplete split type non-magnetized permanent magnets and an incomplete split type non-magnetized permanent magnet capable of reducing eddy current loss.

### 2. Description of the Related Art

EP 2 369 719 A2 discloses a method in which a plurality of rectangular Nd-based sintered magnets having dimensions of 100mm by 100 mm by 20 mm and magnetized in a direction of the thickness 20 mm are provided and subjected to a diffusion treatment. The diffusion treatment is carried out by mixing granular dysprosium fluoride with ethanol, immersing the magnets in this mixture wherein faces of each of the magnets excluding one face perpendicular to the magnetization direction are masked, and then heating the magnets in an Ar atmosphere at 900°C for an hour. Cubes with a side length of 1 mm were cut out from a portion between the center of the face having subjected to the diffusion treatment and the depth at a distance of 1 mm from the treated face, and from an inner central portion, respectively, of one of the magnets.

DE 10 2014 004513 A1 discloses a method for manufacturing a rare earth-iron-boron based magnet.

US 2014/007980 A1 discloses a permanent magnet formed by diffusing a metal having a higher coercive force than a matrix of the permanent magnet in the interior of the matrix and dividing the matrix into multiple parts, the permanent magnet comprising: a cut-out part for diffusing the metal having a higher coercive force in the interior of the matrix, with the matrix being divided into multiple parts at the cut-out part.

EP 1 746 611 A1 discloses a method for preparing a rare earth permanent magnet from a sintered magnet body.

Conventionally, as a driving source of an electric vehicle or an electric rail car, a permanent magnet motor has been used. As one example of a structure thereof, the permanent magnet motor may include a stator having a coil installed thereon and a rotor connected to a driving shaft and having a permanent magnet installed thereon. The motor may be rotated by supplying an alternating current to the rotor and alternately changing polarity.

However, when the motor is rotated and driven, a large eddy current is generated in the permanent magnet while strong magnetic flux generated by the coil penetrates through the permanent magnet, and heat is generated in the permanent magnet by the generated eddy current, thereby increasing loss of electricity.

As a countermeasure, a plurality of permanent magnet pieces obtained by splitting and insulating a permanent magnet base material are combined and the generated eddy current is constrained in each permanent magnet piece, such that an amount of eddy current generated in the permanent magnet may be reduced.

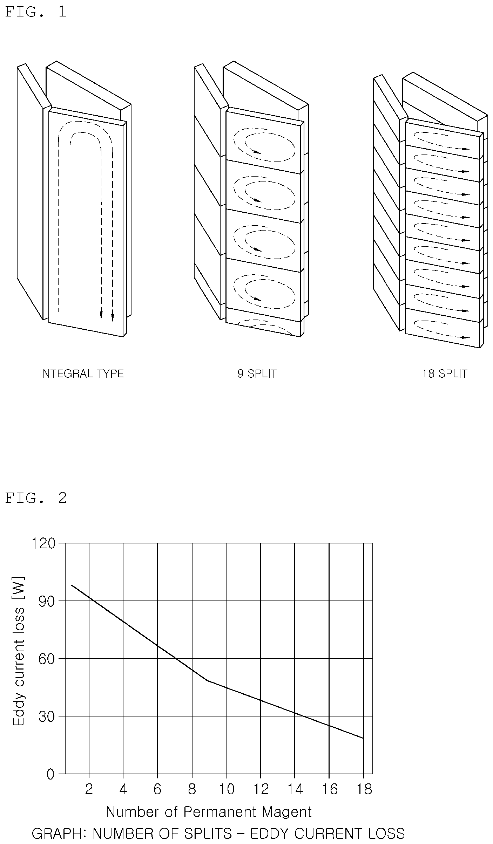

As shown in FIGS. 1 and 2, eddy current loss is proportional to each size of the permanent magnet. Therefore, there is a need for a technology capable of manufacturing a higher efficiency motor by massively producing a split type permanent magnet.

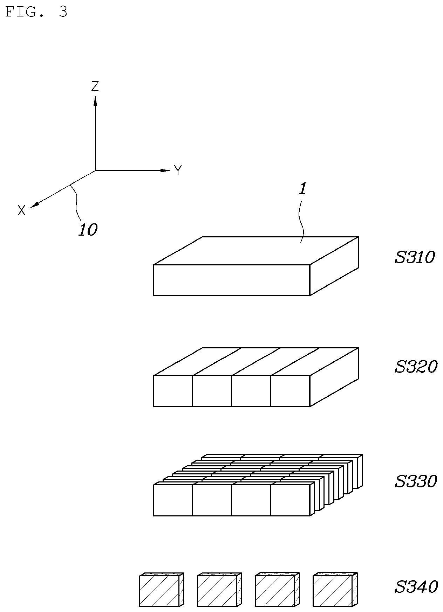

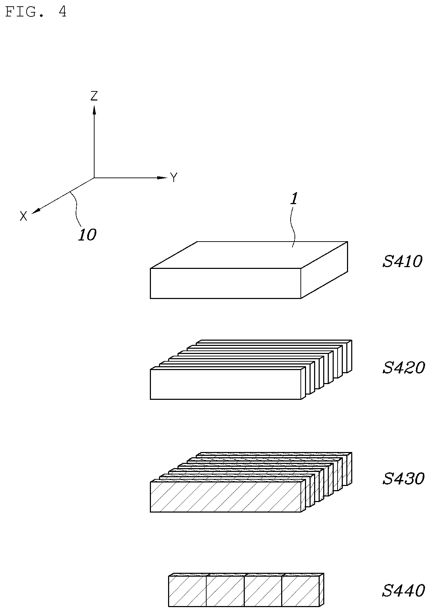

Further, a grain boundary diffusion technology for further increasing a magnetic property of the permanent magnet has been developed. However, as shown in FIGS. 3 and 4, a manufacturing method of a non-magnetized permanent magnet using grain boundary diffusion according to the related art may not be massively produced the non-magnetized permanent magnet. FIG. 3 is a diagram illustrating processes of manufacturing a permanent magnet block 1 (S310), dividing and re-adhering the block 1 (S320), cutting the block 1 into a size of a finished product (S330), and then performing a grain boundary diffusion (S340). The above-mentioned processes lose adhesive property because an adhesive adhering the split block 1 is deteriorated by a heating for increasing diffusion property of the block at the time of performing the grain boundary diffusion. FIG. 4 shows a method of manufacturing a permanent magnet block 1 (S410), cutting the block 1 into a final size (S420), performing a grain boundary diffusion (S430), and splitting and adhering a piece (S440). However, since splitting all pieces and then adhering all pieces geometrically increases processing time, it is difficult to perform mass production.

Therefore, a new manufacturing method of a permanent magnet capable of applying all of the grain boundary diffusion, the splitting, and the adhering has been demanded.

### SUMMARY

An object of the present disclosure is to provide a manufacturing method of split type non-magnetized permanent magnets capable of applying a grain boundary diffusion while reducing eddy current loss.

The present invention provides a manufacturing method of a split type non-magnetized permanent magnet according to claim 1.

According to an embodiment there is provided a manufacturing method of a split type non-magnetized permanent magnet including: manufacturing an anisotropic block having a uniformly aligned magnetization determining direction; performing a first cutting operation by cutting the anisotropic block in a first cutting direction perpendicular to the magnetization determining direction so as to form a plurality of split blocks; performing a grain boundary diffusion on the plurality of split blocks; after performing the grain boundary diffusion, forming an adhered block by adhering surfaces of the plurality of split blocks to each other which are cut by the first cutting operation; and performing a second cutting operation by cutting the adhered block in a second direction perpendicular to the magnetization determining direction and the first cutting direction.

In the manufacturing of the block, the block may be press-molded under an environment in which a magnetic field having a predetermined direction is formed and a thickness of the block in the magnetization determining direction may be 7mm or less.

In the second cutting operation, the block may be cut so as to have a width of 15mm or more.

According to an example, there is provided a manufacturing method of an incomplete split type non-magnetized permanent magnet including: manufacturing an anisotropic block having a magnetization determining direction which is uniformly aligned; wire-cutting 90% or less of a thickness of the anisotropic block in a first wire-cutting direction which is parallel to the magnetization determining direction; cutting the block in a second cutting direction which is perpendicular to the magnetization determining direction so as to form a plurality of split blocks; and performing a grain boundary diffusion on the plurality of split blocks.

In the cutting of the block, the block may be cut so as to have a width of 7mm or less in the magnetization determining direction.

In the wire-cutting of the block and the cutting of the block, the block may be cut so that a non-cutting portion that is formed to extend in a direction perpendicular to a wire-cutting direction and a cutting portion that is formed to extend in a direction (perpendicular to the wire-cutting direction and a cutting direction from the non-cutting portion are able to be configured.

According to another example, there is provided an incomplete split type non-magnetized permanent magnet including a block having an aligned magnetization determining direction. The block has a gap formed in a direction perpendicular to the magnetization determining direction and includes a non-cutting portion which is not split by the gap and a cutting portion formed to be extended in a direction of the gap from the non-cutting portion.

### BRIEF DESCRIPTION OF THE DRAWINGS

The above and other objects, features and advantages of the present disclosure will be more clearly understood from the following detailed description taken in conjunction with the accompanying drawings.
FIG. 1 is a diagram showing a flow of an eddy current generated in a permanent magnet.
FIG. 2 is a graph comparing magnitude of the eddy current generated depending on a size of the permanent magnet.
FIG. 3 is a diagram showing processes of performing a grain boundary diffusion after a splitting and an adhering according to the related art.
FIG. 4 is a diagram showing processes of a splitting and an adhering after performing a grain boundary diffusion according to the related art.
FIG. 5 is a diagram showing processes according to an embodiment of a manufacturing method of a split type non-magnetized permanent magnet.
FIG. 6 is a diagram showing processes according to an example of a manufacturing method of an incomplete split type non-magnetized permanent magnet.

### DETAILED DESCRIPTION

It will be further understood that the terms "comprises" used in this specification, specify stated features, regions, integers, steps, operations, components, and/or parts, but do not preclude the presence or addition of other stated features, regions, integers, steps, operations, components, and/or parts.

Unless indicated otherwise, it is to be understood that all the terms used in the specification including technical and scientific terms have the same meaning as those that are understood by those who skilled in the art. It must be understood that the terms defined by the dictionary are identical with the meanings within the context of the related art, and they should not be ideally or excessively formally defined unless the context clearly dictates otherwise.

Hereinafter, a manufacturing method of split non-magnetized permanent magnet, according to the invention and examples of a manufacturing method of incomplete split type non-magnetized permanent magnet and an incomplete split type non-magnetized permanent magnet will be described with reference to the accompanying drawings.

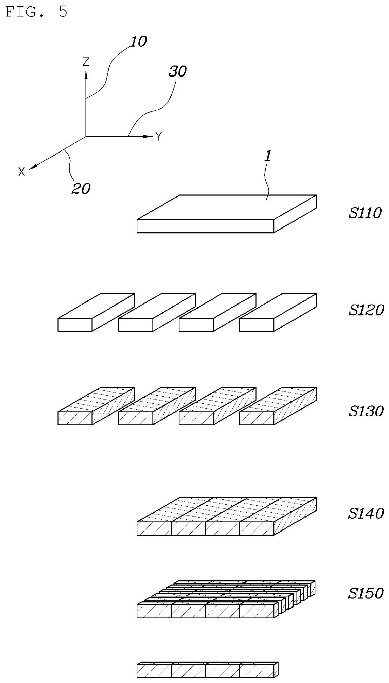

As shown in FIG. 5, a manufacturing method of a split type non-magnetized permanent magnet includes manufacturing an anisotropic block 1 having a magnetization determining direction 10 which is uniformly aligned (S110), a first cutting operation (S120) of cutting the block 1 in a first cutting direction 20 which is perpendicular to the magnetization determining direction 10, performing a grain boundary diffusion for a split block 1 (S130), re-adhering surfaces (S140)which are cut by the first cutting operation (S120), and a second cutting operation (S150) of cutting the block 1 in a second cutting direction 30 which is perpendicular to the magnetization determining direction 10 and the first cutting direction 20 in the first cutting operation (S120).

Due to characteristics of the process in which the grain boundary diffusion needs to be performed along the magnetization determining direction 10, a thickness of the magnetization determining direction 10 of the block 1 needs to be thinly cut so that particles are easily diffused. Although the thickness is conventionally controlled while cutting the block 1 in a direction perpendicular to the magnetization determining direction 10 after the block 1 is manufactured, in the present embodiment the thickness of the magnetization determining direction 10 may be molded to be thin in a process of manufacturing the block 1. The manufactured block 1 is cut in the first cutting direction 20 perpendicular to the magnetization determining direction 10 and the grain boundary diffusion is then performed for the manufactured block 1. In this case, since the adhesion is not performed before the grain boundary diffusion, it is possible to prevent deterioration loss of an adhesive. Once the grain boundary diffusion is completed, the cut surfaces of the block 1 are re-adhered to each other. As an example of the adhesive used for the re-adhesion, a general epoxy based adhesive may be used. The split type non-magnetized permanent magnet may be finished by cutting the adhered block 1 in the second cutting direction 30 which is perpendicular to both the magnetization determining direction 10 and the first cutting direction 20.

In the manufacturing of the block (S110), the block 1 is press-molded under an environment in which a magnetic field having a predetermined direction is formed and the thickness of the block 1 in the magnetization determining direction 10 is preferably manufactured to be 7mm or less.

The reason that properties of a surface and an inner portion of the block 1 are different from each other is because the grain boundary diffusion is not sufficiently performed up to a central portion of the block 1 when the thickness exceeds 7mm.

In the cutting operation (S150), the block is preferably cut to have a width of 15mm or more.

The non-magnetized permanent magnet manufactured according to the present invention is generally installed in other parts such as a motor. In this case, once a size of the block 1 is a predetermined size or less, since it is difficult to assemble the parts to thereby cause deterioration in productivity, a length of an x axis direction is limited to 15mm in the present invention.

In the performing of the grain boundary diffusion (S130), dysprosium and terbium are applied to the surface perpendicular to the magnetization determining direction 10 of the block 1 so as to be diffused into the block 1. The diffusion is increased by heating the block 1 to 600°C and cool the block 1 to room temperature upon the termination of the diffusion. Since the manufacturing method of the permanent magnet using the grain boundary diffusion as described above is a known technology as described in a background technology of the present disclosure, a more detail description thereof will be omitted.

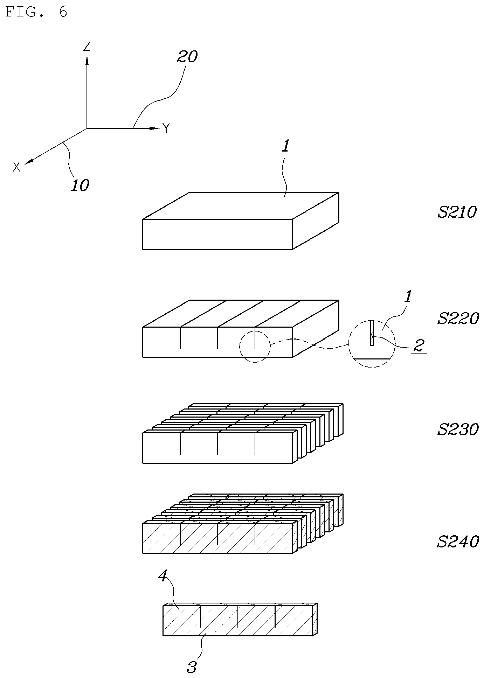

As shown in FIG. 6, a manufacturing method of an incomplete split type non-magnetized permanent magnet includes manufacturing an anisotropic block 1 having a magnetization determining direction 10 which is uniformly aligned (S210), wire-cutting 90% or less of a thickness of the block 1 in a direction 10 which is parallel to the magnetization determining direction 10 (S220), cutting the block 1 in a direction 20 which is perpendicular to the magnetization determining direction 10 (S230), and performing a grain boundary diffusion for the split blocks 1 (S240).

Unlike the foregoing manufacturing method of the split type non-magnetized permanent magnet, the anisotropic block 1 in the manufacturing method of the incomplete split type non-magnetized permanent magnet does not need to form the thickness of the magnetization determining direction 10 to be thin in the manufacturing of the block 1 (S210) . The reason is that there is the cutting of the block 1 (S230) into a surface perpendicular to the magnetization determining direction 10 similar to the related art. A difference between the present disclosure and the related art is that when the block 1 is cut so as to be parallel to the magnetization determining direction 10, the block 1 is not completely cut and is maintained in a state in which a portion thereof is connected. In this case, with consideration for low strength of the block 1, the block 1 is cut using wire-cutting in order to prevent the block 1 from being damaged by impact or vibration. Once the cut thickness of the block 1 is limited to 90% or less of the overall thickness, eddy current loss may be reduced while maintaining minimum connection strength. In addition, the adhesive that serves as a shielding material and a reinforcing material is inserted into a gap 2 which is cut by the wire-cutting. As an example of the adhesive, a general epoxy based adhesive may be used.

In the cutting of the block 1 (S230), the block 1 is preferably cut to have a width of 7mm or less. As described in the description of the manufacturing method of the split type non-magnetized permanent magnet, the reason that properties of a surface and an inner portion of the block 1 are different from each other is because the grain boundary diffusion is not sufficiently performed up to a central portion of the block 1 when the thickness exceeds 7mm.

In the wire-cutting of the block (S220) and the cutting of the block (S230), the block is preferably cut so that a non-cutting portion that is formed to extend in a direction (y axis direction) perpendicular to a wire-cutting direction and a cutting portion that is formed to extend in a direction (z axis direction) perpendicular to the wire-cutting direction and the cutting direction from the non-cutting portion may be configured.

The block 1 that is formed by the above-mentioned incomplete cutting is formed in a shape such as a plate having a crack formed in a portion thereof. The grain boundary diffusion may easily occur by matching the magnetization determining direction and the thin thickness direction and eddy current loss may be reduced by cutting a portion of the surface perpendicular to the magnetization determining direction to decrease an area in which an eddy current may occur.

As shown in FIG. 6, an incomplete split type non-magnetized permanent magnet includes a block 1 having an aligned magnetization determining direction. The block 1 has a gap 2 formed in a direction perpendicular to the magnetization determining direction and includes a non-cutting portion 3 which is not split by the gap 2 and a cutting portion 4 formed to be extended in a direction of the gap 2 from the non-cutting portion 3.

A detailed description thereof will be substituted with the description of the foregoing manufacturing method.

According to the exemplary embodiments of the present disclosure, the manufacturing method of split type and incomplete split type non-magnetized permanent magnets and the incomplete split type non-magnetized permanent magnet may have the following effects.

First, eddy current loss is reduced, thereby making it possible to increase efficiency of the motor.

Second, since the manufacturing method is efficient, the present disclosure may be suitable for mass production.

## Claims

1. A manufacturing method of a split type non-magnetized permanent magnet, the method comprising:
manufacturing an anisotropic block having a uniformly aligned magnetization determining direction;
performing a first cutting operation by cutting the anisotropic block in a first cutting direction perpendicular to the magnetization determining direction so as to form a plurality of split blocks;
performing a grain boundary diffusion on the plurality of split blocks by applying dysprosium and terbium to the surface perpendicular to the magnetization determining direction of the plurality of split blocks followed by heating the plurality of split blocks;
forming an adhered block by re-adhering to each other surfaces of the plurality of split blocks which are cut by the first cutting operation; and
performing a second cutting operation by cutting the adhered block in a second direction perpendicular to the magnetization determining direction and the first cutting direction.

2. The manufacturing method of claim 1, wherein in the manufacturing of the block, the block is press-molded under an environment in which a magnetic field having a predetermined direction is formed, and a thickness of the anisotropic block in the magnetization determining direction is 7mm or less.

3. The manufacturing method of claim 2, wherein in the second cutting operation, the block is cut so as to have a width of 15mm or more.

## Patentansprüche

1. Herstellungsverfahren eines nicht magnetisierten Permanentmagneten vom geteilten Typ, wobei das Verfahren Folgendes umfasst:
Herstellen eines anisotropen Blocks mit einer gleichmäßig ausgerichteten Magnetisierungsbestimmungsrichtung;
Durchführen eines ersten Schneidvorgangs durch Schneiden des anisotropen Blocks in einer ersten Schnittrichtung senkrecht zu der Magnetisierungsbestimmungsrichtung, um mehrere geteilte Blöcke zu bilden;
Durchführen einer Korngrenzendiffusion auf den mehreren geteilten Blöcken durch Aufbringen von Dysprosium und Terbium auf der Fläche senkrecht zu der Magnetisierungsbestimmungsrichtung der mehreren geteilten Blöcke, gefolgt von einem Erwärmen der mehreren geteilten Blöcke;
Bilden eines Haftblocks durch Wiederanhaften aneinander von Flächen der mehreren geteilten Blöcke, die durch den ersten Schneidvorgang geschnitten werden; und
Durchführen eines zweiten Schneidvorgangs durch Schneiden des Haftblocks in einer zweiten Richtung senkrecht zu der Magnetisierungsbestimmungsrichtung und der ersten Schnittrichtung.

2. Herstellungsverfahren nach Anspruch 1, wobei beim Herstellen des Blocks der Block in einer Umgebung, in der ein Magnetfeld mit einer vorbestimmten Richtung gebildet wird, pressgeformt wird und eine Dicke des anisotropen Blocks in der Magnetisierungsbestimmungsrichtung 7 mm oder weniger beträgt.

3. Herstellungsverfahren nach Anspruch 2, wobei der Block in dem zweiten Schneidvorgang geschnitten wird, um eine Breite von 15 mm oder mehr aufzuweisen.

## Revendications

1. Procédé de fabrication d'un aimant permanent non aimanté du type divisé, le procédé comprenant les étapes suivantes :
fabriquer un bloc anisotrope ayant une direction de détermination d'aimantation alignée uniformément ;
réaliser une première opération de découpe en découpant le bloc anisotrope dans une première direction de découpe perpendiculaire à la direction de détermination d'aimantation, de manière à former une pluralité de blocs divisés ;
réaliser une diffusion aux joints de grains sur la pluralité de blocs divisés en appliquant du dysprosium et du terbium sur la surface perpendiculaire à la direction de détermination d'aimantation de la pluralité de blocs divisés, puis chauffer la pluralité de blocs divisés ;
former un bloc collé en recollant entre elles des surfaces de la pluralité de blocs divisés qui sont découpés par la première opération de découpe ; et
réaliser une seconde opération de découpe en découpant le bloc collé dans une seconde direction perpendiculaire à la direction de détermination d'aimantation et à la première direction de découpe.

2. Procédé de fabrication selon la revendication 1, dans lequel, lors de la fabrication du bloc, le bloc est moulé à la presse dans un environnement dans lequel un champ magnétique ayant une direction prédéterminée est formé, et une épaisseur du bloc anisotrope dans la direction de détermination d'aimantation est inférieure ou égale à 7 mm.

3. Procédé de fabrication selon la revendication 2, dans lequel, lors de la seconde opération de découpe, le bloc est découpé de manière à présenter une largeur supérieure ou égale à 15 mm.
